# EUROPEAN PATENT APPLICATION

(11) **EP 4 600 583 A1**
(43) Date of publication of application: **13.08.2025**
(21) Application number: 23894300.5
(22) Date of filing: 17.10.2023
(51) Int. Cl.: F25B 11/02, B60P 3/22, B01D 53/62, B01D 53/78, B01D 53/96, C01B 32/50

(54) **TRANSPORT VEHICLE, CARBON DIOXIDE COLLECTION METHOD, AND CARBON DIOXIDE TRANSPORT METHOD**

(30) Priority: 25.11.2022 JP 2022187923
(71) Applicant: Mitsubishi Heavy Industries, Ltd., Tokyo 100-8332 (JP)
(72) Inventor: TANAKA, Toshimitsu, Tokyo 100-8332 (JP); NAKAMICHI, Kenji, Tokyo 100-8332 (JP)
(74) Representative: Studio Torta S.p.A.
(86) International application number: PCT/JP2023/037509
(87) International publication number: WO 2024/111288

(57) **Abstract**

A transport vehicle for transporting liquid carbon dioxide includes a refrigerator configured to liquidize carbon dioxide gas and a storage tank configured to store liquid carbon dioxide. The refrigerator includes a compressor configured to compress a first heat transfer medium, a heat exchanger configured to cool the first heat transfer medium compressed by the compressor, an expander configured to expand the first heat transfer medium cooled by the heat exchanger, a separator configured to separate carbon dioxide gas from an absorption liquid or an adsorbent by using thermal energy generated by the first heat transfer medium compressed by the compressor, and a liquefier configured to liquify the carbon dioxide gas separated from the absorption liquid or the adsorbent by the separator, by using cold energy generated by the first heat transfer medium expanded by the expander.

## Description

### TECHNICAL FIELD

This disclosure relates to a transport vehicle, a carbon dioxide collection method, and a carbon dioxide transport method for collecting and transporting carbon dioxide included in exhaust gas exhausted from a combustion device.

This application claims priority over Japanese Patent Application No. 2022-187923 filed to the Japan Patent Office on November 25, 2022, the contents of which are hereby incorporated herein by reference.

### BACKGROUND

Carbon dioxide included in exhaust gas exhausted from a combustion device is traditionally separated from exhaust gas as carbon dioxide gas by causing a liquid absorbent such as amine to absorb the carbon dioxide or by causing the carbon dioxide to adsorb onto an adsorbent (see, for example, Patent Document 1). Since the carbon dioxide collected from the exhaust gas is in a gaseous state, it is necessary to liquefy and densify the carbon dioxide in order to transport it efficiently to a remote collection site.

### Citation List

### Patent Literature

Patent Document 1: JP2635536A

### SUMMARY

### Technical Problem

In order to collect and liquify the carbon dioxide from the exhaust gas, a facility for providing a heat source for separating the carbon dioxide gas from the exhaust gas and a facility for providing a cold energy source for liquifying the carbon dioxide are both required. Introducing both of these facilities is likely to increase the burden placed on small-to-medium-sized businesses. In order to reduce this burden, it is desirable to suppress the size and complexity of facilities for collecting carbon dioxide included in exhaust gas.

In this regard, it is an object of at least one embodiment of the present invention to provide a transport vehicle, a carbon dioxide collection method, and a carbon dioxide transport method capable of suppressing the size and complexity of a facility for collecting carbon dioxide included in exhaust gas exhausted from a combustion device.

### Solution to Problem

A transport vehicle according to at least one embodiment of the present invention is a transport vehicle for transporting liquid carbon dioxide, the transport vehicle including:
a refrigerator configured to liquidize carbon dioxide gas; and
a storage tank configured to store liquid carbon dioxide, in which the refrigerator includes:
   a compressor configured to compress a first heat transfer medium;
   a heat exchanger configured to cool the first heat transfer medium compressed by the compressor;
   an expander configured to expand the first heat transfer medium cooled by the heat exchanger;
   a separator configured to separate carbon dioxide gas from an absorption liquid that has absorbed the carbon dioxide or an adsorbent onto which the carbon dioxide is adsorbed, by using thermal energy generated by the first heat transfer medium compressed by the compressor; and
   a liquefier configured to liquify the carbon dioxide gas separated from the absorption liquid or the adsorbent by the separator, by using cold energy generated by the first heat transfer medium expanded by the expander.

A carbon dioxide collection method according to at least one embodiment of the present invention is a carbon dioxide collection method for collecting carbon dioxide included in exhaust gas exhausted from a combustion device, the method including:
a carbon dioxide extraction step of causing the carbon dioxide included in the exhaust gas to be adsorbed by an absorption liquid or causing the carbon dioxide included in the exhaust gas to be adsorbed onto an adsorbent;
a compression step of compressing a first heat transfer medium by using a compressor in a refrigerator mounted in a transport vehicle for transporting liquid carbon dioxide;
a cooling step of cooling the first heat transfer medium compressed by the compressor by using a heat exchanger in the refrigerator;
an expansion step of expanding the first heat transfer medium cooled by the heat exchanger by using an expander in the refrigerator;
a separation step of separating carbon dioxide gas from the absorption liquid that has absorbed the carbon dioxide or the adsorbent onto which the carbon dioxide is adsorbed, by using thermal energy generated by the first heat transfer medium compressed by the compressor; and
a liquification step of liquifying the carbon dioxide gas separated from the absorption liquid or the adsorbent in the separation step, by using cold energy generated by the first heat transfer medium expanded by the expander.

A carbon dioxide transport method according to at least one embodiment of the present invention is a carbon dioxide transport method for transporting carbon dioxide, the method including:
a first transfer step of transferring liquid carbon dioxide collected at a facility for collecting carbon dioxide included in exhaust gas exhausted from a combustion device, to a first tank disposed in a remote location far from the facility; and
a second transfer step of transferring the liquid carbon dioxide from the first tank to a second tank via a first pipeline connecting the first tank and the second tank, the second tank being disposed in a remote location far from the first tank, in which
the first transfer step includes a transport vehicle delivery step of storing the liquid carbon dioxide in a storage tank mounted in a transport vehicle and using the transport vehicle to deliver the liquid carbon dioxide stored in the storage tank to the first tank.

### Advantageous Effects

According to at least one embodiment of the present invention, a transport vehicle, a carbon dioxide collection method, and a carbon dioxide transport method capable of suppressing the size and complexity of a facility for collecting carbon dioxide included in exhaust gas exhausted from a combustion device are provided.

### BRIEF DESCRIPTION OF DRAWINGS

FIG. 1 is an explanatory diagram illustrating a carbon dioxide collection method according to an embodiment of the disclosure.
FIG. 2 is a diagram schematically illustrating a transport vehicle and a carbon dioxide collection device according to the embodiment of the disclosure.
FIG. 3 is an explanatory diagram illustrating the carbon dioxide collection method according to the embodiment of the disclosure.
FIG. 4 is a diagram schematically illustrating a regeneration tower, a separator, and a drive device-side heat exchanger according to the embodiment of the disclosure.
FIG. 5 is a diagram schematically illustrating the regeneration tower, the separator, and the drive device-side heat exchanger according to the embodiment of the disclosure.
FIG. 6 is an explanatory diagram illustrating the carbon dioxide collection method according to the embodiment of the disclosure.
FIG. 7 is a diagram schematically illustrating the transport vehicle according to the embodiment of the disclosure.
FIG. 8 is an explanatory diagram illustrating an example arrangement of a facility, a first tank, and a second tank used in the carbon dioxide transport method according to the embodiment of the disclosure.
FIG. 9 is an explanatory diagram illustrating the carbon dioxide transport method according to the embodiment of the disclosure.
FIG. 10 is an explanatory diagram illustrating the carbon dioxide transport method according to the embodiment of the disclosure.
FIG. 11 is an explanatory diagram illustrating the carbon dioxide transport method according to the embodiment of the disclosure.

### DETAILED DESCRIPTION

Embodiments of the present invention will now be described in detail with reference to the accompanying drawings. It is intended, however, that dimensions, materials, shapes, relative positions and the like of components described in the embodiments or illustrated in the drawings shall be interpreted as illustrative only and not limitative of the scope of the present invention.

### (Collection Method of Carbon Dioxide)

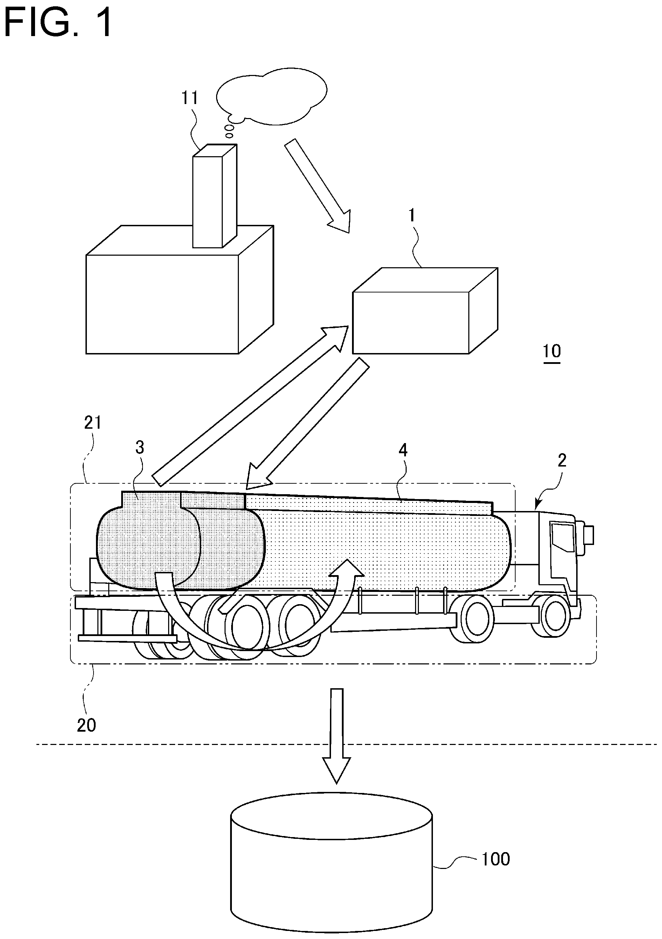

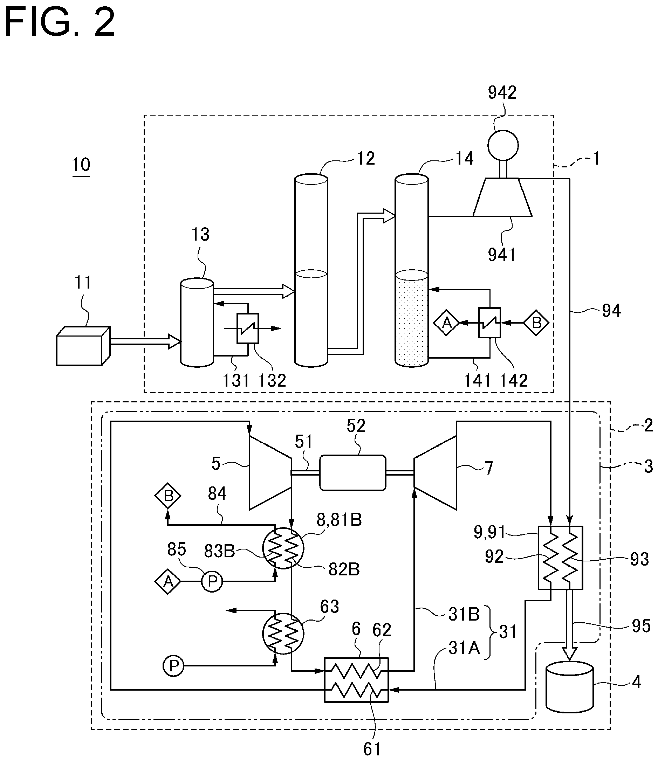

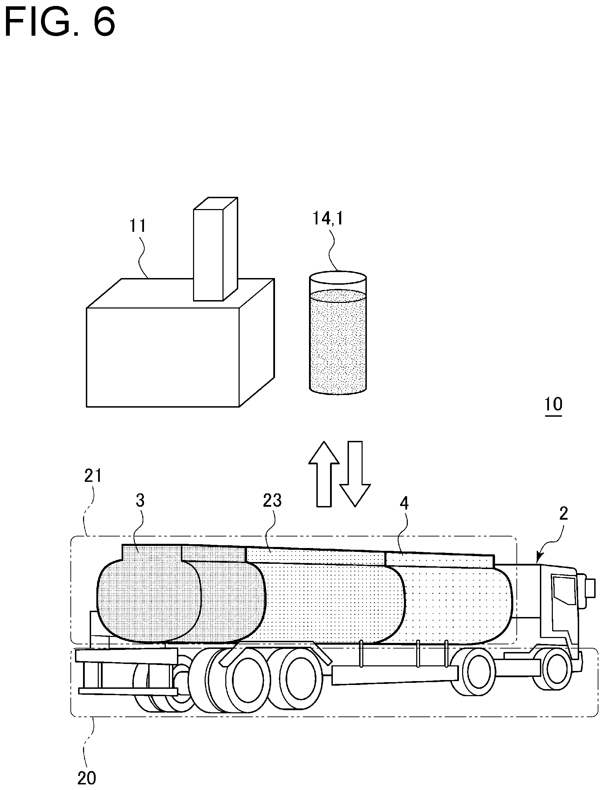

FIG. 1, FIG, 3, and FIG. 6 are explanatory diagrams illustrating a carbon dioxide collection method according to an embodiment of the disclosure. FIG. 2 is a diagram schematically illustrating a transport vehicle 2 and a carbon dioxide collection device 1 according to the embodiment of the disclosure. The carbon dioxide collection method according to the embodiments is a method for collecting carbon dioxide included in exhaust gas exhausted from a combustion device 11, such as an engine. The carbon dioxide collection method includes a carbon dioxide extraction step, a compression step, a cooling step, an expansion step, a separation step, and a liquification step.

In the illustrated embodiment, the carbon dioxide extraction step is performed by the carbon dioxide collection device 1. The compression step, cooling step, expansion step, separation step, and liquification step are performed by a refrigerator 3 mounted in the transport vehicle 2. Note that, the steps of the carbon dioxide collection method may be performed by separate devices constituting the carbon dioxide collection device 1 or separate devices constituting the transport vehicle 2, or may be performed manually or by equipment that does not constitute the carbon dioxide collection device 1 or the transport vehicle 2.

### (Carbon Dioxide Collection Device)

In the carbon dioxide extraction step described above, the carbon dioxide included in the exhaust gas is absorbed by a liquid absorbent or caused to adsorb onto an adsorbent. The carbon dioxide collection device 1 is installed in a facility (for example, a plant) 10 installed with the combustion device 11. The carbon dioxide collection device 1 is configured to cause the liquid absorbent to absorb the carbon dioxide included in the exhaust gas exhausted from the combustion device 11 or cause the carbon dioxide included in the exhaust gas to adsorb onto an adsorbent.

In the embodiments, the carbon dioxide collection device 1 is configured to cause the liquid absorbent to absorb the carbon dioxide included in the exhaust gas exhausted from the combustion device 11. In the illustrated embodiment, the carbon dioxide collection device 1 includes an absorption tower 12 configured to cause the exhaust gas exhausted from the combustion device 11 to make gas-liquid contact with the absorption liquid. In the absorption tower 12, the exhaust gas guided into the absorption tower 12 makes gas-liquid contact with the absorption liquid dispersed within the absorption tower 12, such that the carbon dioxide included in the exhaust gas is absorbed by the absorption liquid. An example of the absorption liquid is liquid amine. Note that the absorption liquid is not limited to liquid amine and may be any liquid that can absorb carbon dioxide.

In the illustrated embodiment, the carbon dioxide collection device 1 further includes a cooling tower 13 and a regeneration tower 14. The cooling tower 13 includes a cooling water circulation line 131 for drawing cooling water stored in the cooling tower 13 from the cooling tower 13 and dispersing the cooling water inside the cooling tower 13, and a cooling water cooler 132 for cooling the cooling water flowing in the cooling water circulation line 131 by using a cold energy medium (for example, industrial water having a temperature lower than that of the cooling water). The exhaust gas exhausted from the combustion device 11 is introduced into the cooling tower 13. In the cooling tower 13, the exhaust gas introduced into the cooling tower 13 and the cooling water dispersed inside the cooling tower 13 via the cooling water circulation line 131 are made to come into gas-liquid contact to cool the exhaust gas to a certain temperature. The exhaust gas cooled in the cooling tower 13 is then introduced into the absorption tower 12. The absorption liquid that has absorbed the carbon dioxide in the absorption tower 12 is introduced into the regeneration tower 14, and is stored inside the regeneration tower 14.

In some other embodiments, the carbon dioxide collection device 1 may be configured to cause the carbon dioxide included in the exhaust gas exhausted from the combustion device 11 to be adsorbed onto a solid-state adsorbent. An example of the adsorbent is a solid adsorbent such as zeolite. Note that, the adsorbent is not limited to zeolite and may be any solid on which carbon dioxide can adsorb.

The adsorbent is configured to adsorb the carbon dioxide included in the exhaust gas by either temperature swing adsorption (TSA) or pressure swing adsorption (PSA), and to separate the adsorbed carbon dioxide.

In temperature swing adsorption (TSA), a temperature difference is used as the means of separating the carbon dioxide from the exhaust gas. In other words, in temperature swing adsorption (TSA), the carbon dioxide gas is separated from the adsorbent by heating the adsorbent onto which the carbon dioxide is adsorbed to a second predetermined temperature that is higher than a first predetermined temperature at which the carbon dioxide is adsorbed onto the adsorbent.

In pressure swing adsorption (PSA), a pressure difference is used as the means of separating the carbon dioxide from the exhaust gas. In other words, in pressure swing adsorption (PSA), the carbon dioxide gas is separated from the adsorbent by reducing the pressure of the adsorbent onto which the carbon dioxide is adsorbed to a second predetermined pressure that is lower than a first predetermined pressure at which the carbon dioxide is adsorbed onto the adsorbent.

### (Transport Vehicle)

The transport vehicle 2 is a vehicle for transporting liquid carbon dioxide (carbon dioxide in a liquid state). As shown in FIG. 1, FIG. 3, and FIG. 6, the transport vehicle 2 includes a refrigerator 3 for liquifying the carbon dioxide gas and a storage tank 4 configured to store the liquid carbon dioxide. In the illustrated embodiment, the transport vehicle 2 includes a drive device 20 for driving the transport vehicle 2 and a cargo bed 21. The refrigerator 3 and the storage tank 4 are mounted on the cargo bed 21 of the transport vehicle 2. The cargo bed 21 is located above the drive device 20 of the transport vehicle 2.

### (Refrigerator)

As illustrated in FIG. 2, the refrigerator 3 includes a compressor 5, a heat exchanger 6, an expander 7, a separator 8, and a liquefier 9. The refrigerator 3 further includes a circulation line 31 configured to circulate a first heat transfer medium. The compressor 5, the heat exchanger 6, and the expander 7 are provided on the circulation line 31. The compressor 5, the heat exchanger 6, the expander 7, and the circulation line 31 constitute a refrigeration cycle. An example of the first heat transfer medium is air. Note that, the first heat transfer medium may be a heat transfer medium other than air.

The circulation line 31 includes an expansion gas line 31A for guiding the first heat transfer medium expanded by the expander 7 to the compressor 5, and a compression gas line 31B for guiding the first heat transfer medium compressed by the compressor 5 to the expander 7. Each of the expansion gas line 31A and the compression gas line 31B forms a flow path for circulating the first heat transfer medium and is formed by piping, for example. Additionally, the individual pipes that form the circulation line 31 may be made up of multiple pipe sections connected via flanges or the like.

### (Compressor)

The compressor 5 is configured to compress the first heat transfer medium. In the compression step described above, the first heat transfer medium is compressed by the compressor 5. By driving the compressor 5, the first heat transfer medium in a gaseous state that is sucked into the compressor 5 from the upstream side of the compressor 5 in the circulation line 31 is compressed. The first heat transfer medium compressed by the compressor 5 is heated and pressurized to a higher temperature and pressure than before being introduced into the compressor 5, to thereby become a high-temperature and high-pressure gas.

### (Heat Exchanger)

The heat exchanger 6 is configured to cool the first heat transfer medium compressed by the compressor 5. In the cooling step described above, the first heat transfer medium compressed by the compressor 5 is cooled by the heat exchanger 6. The heat exchanger 6 is configured to perform heat exchange between the first heat transfer medium flowing in the expansion gas line 31A and the first heat transfer medium flowing in the compressed gas line 31B. After being compressed by the compressor 5, the first heat transfer medium flowing in the compressed gas line 31B is at a higher temperature than the first heat transfer medium flowing in the expansion gas line 31A.

The heat exchange performed by the heat exchanger 6 cools the first heat transfer medium flowing in the compressed gas line 31B and heats the first heat transfer medium flowing in the expansion gas line 31A. In other words, the heat exchanger 6 includes a low-temperature heat exchange section 61 through which the first heat transfer medium provided in the expansion gas line 31A flows, and a high-temperature heat exchange section 62 through which the first heat transfer medium provided in the compression gas line 31B flows, and heat is transferred from the first heat transfer medium flowing in the high-temperature heat exchange section 62 to the first heat transfer medium flowing in the low-temperature heat exchange section 61.

### (Pre-cooler)

As illustrated in FIG. 2, the refrigerator 3 may further include a pre-cooler 63 provided between the compressor 5 and the heat exchanger 6 (high-temperature heat exchange section 62) on the compressed gas line 31B (circulation line 31). The pre-cooler 63 is provided upstream of the high-temperature heat exchange section 62 on the compressed gas line 31B and is configured to perform heat exchange between the first heat transfer medium flowing in the compressed gas line 31B (pre-cooler 63) and a cooling liquid (e.g., water such as industrial water) that has a lower temperature than that of the first heat transfer medium. The pre-cooler 63 is supplied with the cooling liquid by a pump. As a result of the heat exchange by the pre-cooler 63, the first heat transfer medium flowing in the compressed gas line 31B toward the high-temperature heat exchange section 62 is cooled by the cooling liquid. The first heat transfer medium cooled by the pre-cooler 63 is introduced into the high-temperature heat exchange section 62 via the compressed gas line 31B.

### (Expander)

The expander 7 is configured to expand the first heat transfer medium cooled by the heat exchanger 6 (high-temperature heat exchange section 62). In the expansion step described above, the first heat transfer medium cooled by the heat exchanger 6 is expanded by the expander 7. The first heat transfer medium in a gaseous state that has been expanded by the expander 7 is cooled and decompressed before being introduced to the expander 7, to thereby become a low-temperature and low-pressure gas.

In some embodiments, the expander 7 may be connected to the compressor 5 via a rotating shaft 51. In the illustrated embodiment, the refrigerator 3 further includes an electric motor 52 configured to generate a driving force for driving the compressor 5. The electric motor 52 has variable output. The compressor 5 includes an electric compressor configured to be driven by the electric motor 52 and compress circulating gas. The compressor 5 and the expander 7 are each connected to the rotating shaft 51 and are arranged on the same axis via the rotating shaft 51, which is an output shaft of the electric motor 52 for driving the compressor 5. The electric motor 52 is supplied with a current from a power source such as a generator (not shown) and is configured to be driven by the current supplied from the power source to drive the rotating shaft 51, the compressor 5, and the expander 7. In the expander 7, some of the expansion energy generated when the gas is expanded is recovered, and this recovered expansion energy is used to assist in driving the compressor 5. Preferably, the power source for the electric motor 52 is mounted on the transport vehicle 2.

### (Separator)

In the separation step described above, the carbon dioxide gas is separated from the absorption liquid that has absorbed the carbon dioxide or the adsorbent onto which the carbon dioxide is adsorbed, by using thermal energy generated by the first heat transfer medium compressed by the compressor 5. In the illustrated embodiment, the separation step is performed by the separator 8. The separator 8 is configured to separate the carbon dioxide gas from the absorption liquid that has absorbed the carbon dioxide or the adsorbent onto which the carbon dioxide is adsorbed by using the thermal energy generated by the first heat transfer medium compressed by the compressor 5.

In the illustrated embodiment, the absorption liquid stored in the regeneration tower 14 and that has absorbed the carbon dioxide is heated by the thermal energy generated by the first heat transfer medium compressed by the compressor 5, and the carbon dioxide gas is separated from the absorption liquid. By heating the absorbent to a predetermined temperature (e.g., 140°C) or higher, the carbon dioxide gas absorbed by the absorbent is separated. The absorption liquid recovers its carbon dioxide absorption performance as the carbon dioxide gas is separated in the separator 8.

### (Liquefier)

In the liquification step described above, the carbon dioxide gas that has been separated from the absorption liquid or the adsorbent in the separation step described above is liquified by using cold energy generated by the first heat transfer medium expanded by the expander 7. In the illustrated embodiment, the liquification step is performed by the liquefier 9. The liquefier 9 is configured to liquefy the carbon dioxide gas that has been separated from the absorption liquid or the adsorbent by the separator 8 by using the cold energy generated by the first heat transfer medium expanded by the expander 7.

In the illustrated embodiment, the liquefier 9 includes a cooler 91 configured to perform heat exchange between the first heat transfer medium flowing in the expansion gas line 31A and the carbon dioxide gas separated from the absorption liquid by the separator 8. The heat exchange performed by the cooler 91 heats the first heat transfer medium flowing in the expansion gas line 31A and cools the carbon dioxide gas, causing the carbon dioxide gas to liquify. The cooler 91 is provided between the expander 7 and the low-temperature heat exchange section 61 (heat exchanger 6) on the expansion gas line 31A. Further, the cooler 91 includes a first heat transfer medium-side heat exchange section 92 through which the first heat transfer medium expanded by the expander 7 flows, a carbon dioxide gas-side heat exchange section 93 into which the carbon dioxide gas separated from the absorption liquid by the separator 8 is introduced via a gas line 94 and through which said carbon dioxide gas flows, and heat is transferred from the carbon dioxide gas flowing in the carbon dioxide gas-side heat exchange section 93 to the first heat transfer medium flowing in the first heat transfer medium-side heat exchange section 92. Note that, a compressor 941 configured to pressurize the carbon dioxide gas flowing in the gas line 94 may be installed on the gas line 94. The compressor 941 may be an electric compressor connected to an electric motor 942 and configured to be driven by the electric motor 942. The carbon dioxide gas pressurized by the compressor 941 flows down the gas line 94 downstream (toward the carbon dioxide gas-side heat exchange section 93).

During the compression step, the cooling step, the expansion step, the separation step, and the liquification step, the transport vehicle 2 is positioned in a location where piping can be connected to the carbon dioxide collection device 1, such as on the premises of the plant 10 where the carbon dioxide collection device 1 is installed. The gas line 94 is a line for guiding the carbon dioxide gas from the regeneration tower 14 to the carbon dioxide gas-side heat exchange section 93. The gas line 94 is connected before the compression step, the cooling step, the expansion step, the separation step, and the liquification step are performed, and after the transport vehicle 2 has moved to the plant 10. Note that, the gas line 94, the compressor 941, and the electric motor 942 may be included in the carbon dioxide collection device 1 or in the transport vehicle 2.

The carbon dioxide collection method may further include a transport step in which the carbon dioxide liquified in the liquification step is transported to a transport destination 100 (supply destination or storage destination) for liquid carbon dioxide. The carbon dioxide liquified by the cooler 91 (liquefier 9) is stored in the storage tank 4. The liquid carbon dioxide stored in the storage tank 4 is transported to the transport destination 100 for the liquid carbon dioxide by the transport vehicle 2.

As illustrated in FIG. 2, the transport vehicle 2 according to some embodiments includes the refrigerator 3, which includes the compressor 5, the heat exchanger 6, the expander 7, the separator 8, and the liquefier 9, and the storage tank 4. Further, the carbon dioxide collection method according to some embodiments includes the carbon dioxide extraction step, the compression step, the cooling step, the expansion step, the separation step, and the liquification step described above.

According to the configuration (method) described above, the carbon dioxide gas separated from the absorption liquid or the adsorbent can be liquified by the liquefier 9 (in the liquification step) by using the cold energy generated by the first heat transfer medium expanded by the expander 7 of the refrigerator 3 as a cold energy source. Further, the carbon dioxide gas can be separated from the absorption liquid or the adsorbent by the separator 8 (in the separation step) by using the thermal energy generated by the first heat transfer medium compressed by the compressor 5, which is waste heat of the refrigerator 3. In this case, since the waste heat of the refrigerator 3 is used, the load placed on the boiler equipment that supplies the heat source to the absorption liquid or the adsorbent can be reduced, or the boiler equipment can be omitted. According to the configuration (method) described above, since both the heat source and the cold energy source can be supplied from the refrigerator 3, it is possible to suppress the size and complexity of the facility (plant) 10 for collecting the carbon dioxide included in the exhaust gas.

According to the configuration (method) described above, even in a case where a refrigerator is not provided in the facility for collecting the carbon dioxide, a heat source can be provided to the absorption liquid or adsorbent from the refrigerator 3 mounted in the transport vehicle 2, and a cold energy source can be provided for the carbon dioxide gas. Thus, according to the configuration (method) described above, even in a case where a refrigerator is not provided in the facility (plant) 10 for collecting the carbon dioxide, it is possible to suppress the size and complexity of the facility.

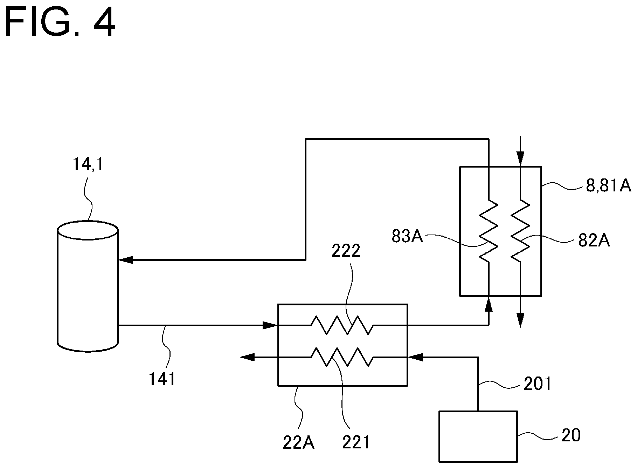

FIG. 4 is a diagram schematically illustrating the regeneration tower 14, the separator 8, and the drive device-side heat exchanger 22 according to an embodiment of the disclosure. As illustrated in FIG. 4, in some embodiments, the separator 8 includes a heater 81A configured to perform heat exchange between the absorption liquid or the adsorbent and the first heat transfer medium to heat the absorption liquid or the adsorbent. As illustrated in FIG. 2, the liquefier 9 includes the cooler 91 configured to perform heat exchange between the first heat transfer medium and carbon dioxide gas to cool the carbon dioxide gas.

In the illustrated embodiment, the regeneration tower 14 includes an absorption liquid circulation line 141 that returns the absorption liquid stored inside the regeneration tower 14 to the regeneration tower 14 after the absorption liquid has been drawn out of the regeneration tower 14. The heater 81A (separator 8) is provided between the compressor 5 and the pre-cooler 63 on the compressed gas line 31B (circulation line 31). The heat exchange performed by the heater 81A cools the first heat transfer medium flowing in the compressed gas line 31B and heats the absorption liquid flowing in the absorption liquid circulation line 141.

The heater 81A includes a first heat transfer medium-side heat exchange section 82A provided between the compressor 5 and the pre-cooler 63 on the compressed gas line 31B and through which the first heat transfer medium flows, and an absorption liquid-side heat exchange section 83A provided on the absorption liquid circulation line 141 and through which the absorption liquid flows. Further, heat is transferred from the first heat transfer medium flowing in the first heat transfer medium-side heat exchange section 82A to the absorption liquid flowing in the absorption liquid-side heat exchange section 83A. The absorption liquid heated by the heater 81A is guided to the regeneration tower 14 via the absorption liquid circulation line 141, and the absorption liquid inside the regeneration tower 14 is heated, which causes the carbon dioxide gas absorbed in the absorption liquid to separate.

In the illustrated embodiment, the cooler 91 (liquefier 9) is provided between the expander 7 and the low temperature-side heat exchange section 61 (heat exchanger 6) on the expansion gas line 31A (circulation line 31). The heat exchange performed by the cooler 91 heats the first heat transfer medium flowing in the expansion gas line 31A, and cools and liquifies the carbon dioxide gas.

The cooler 91 is provided between the expander 7 and the low temperature-side heat exchange section 61 on the expansion gas line 31A and includes the first heat transfer medium-side heat exchange section 92 through which the first heat transfer medium expanded by the expander 7 flows, and the carbon dioxide gas-side heat exchange section 93 into which the carbon dioxide gas separated from the adsorbent by the separator 8 is introduced via the gas line 94 and through which the carbon dioxide gas flows. Further, the cooler 91 is configured such that heat is transferred from the carbon dioxide gas flowing in the carbon dioxide gas-side heat exchange section 93 to the first heat transfer medium flowing in the first heat transfer medium-side heat exchange section 92.

According to the configuration described above, heat exchange is directly performed by the heater 81A between the absorption liquid or the adsorbent and the first heat transfer medium. Further, heat exchange is directly performed by the cooler 91 between the first heat transfer medium and the carbon dioxide gas. With this configuration, the number of heat exchangers that make up the refrigerator 3 can be reduced, and thus the size, complexity, and cost of the refrigerator 3 can be reduced.

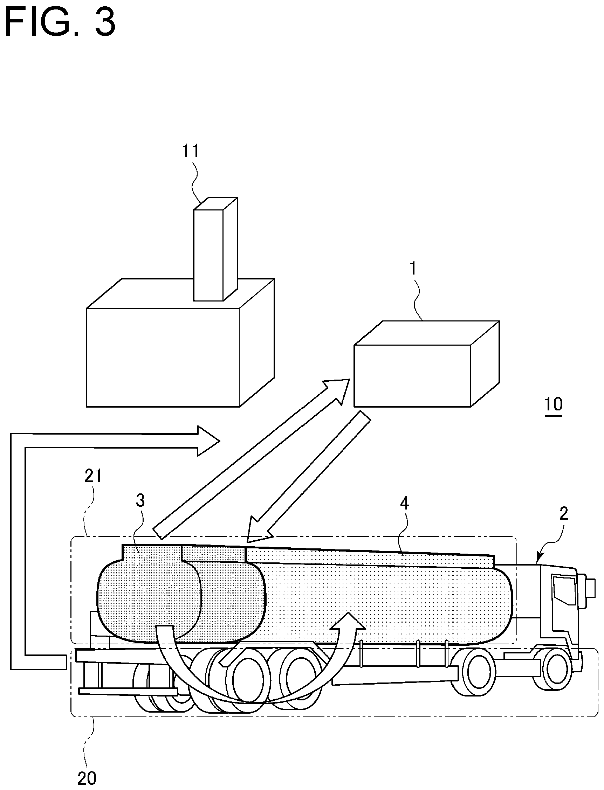

As illustrated in FIG. 4, in some embodiments, the refrigerator 3 may further include a drive device-side heat exchanger 22A configured to heat the absorption liquid or the adsorbent by using thermal energy generated by the drive device 20 (see FIG. 3) for driving the transport vehicle 2.

The drive device 20 includes a drive force generation unit, such as an engine or fuel cell, configured to generate drive force for driving the transport vehicle 2 and a drive force transmission unit, such as a transmission shaft, configured to transmit the drive force generated by the drive force generation unit to wheels. The refrigerator 3 may further include an exhaust gas introduction passage 201 for guiding the exhaust gas generated by at least one of the drive force generation unit or the drive force transmission unit of the drive device 20 to the drive device-side heat exchanger 22A.

The drive device-side heat exchanger 22A is provided upstream of the absorption liquid-side heat exchange section 83A on the absorption liquid circulation line 141. The heat exchange performed by the drive device-side heat exchanger 22A heats the absorption liquid flowing in the absorption liquid circulation line 141.

The drive device-side heat exchanger 22A includes an exhaust gas-side heat exchange section 221 through which exhaust gas introduced into the drive device-side heat exchanger 22A from the drive device 20 via the exhaust gas introduction passage 201 flows, and an absorption liquid-side heat exchange section 222 provided upstream of the absorption liquid-side heat exchange section 83A on the absorption liquid circulation line 141 and through which the absorption liquid flows. Further, the drive device-side heat exchanger 22A is configured such that heat is transferred from the exhaust gas flowing in the exhaust gas-side heat exchange section 221 to the absorption liquid flowing in the absorption liquid-side heat exchange section 222.

According to the configuration described above, the drive device-side heat exchanger 22A can use waste heat (thermal energy) from the drive device 20 of the transport vehicle 2 as a heat source to heat the absorption liquid or the adsorbent. With this configuration, since the thermal energy supplied from the refrigerator 3 to the absorption liquid or the adsorbent as a heat source can be reduced, the energy efficiency of the refrigerator 3 can be increased and the running cost of the refrigerator 3 can be reduced.

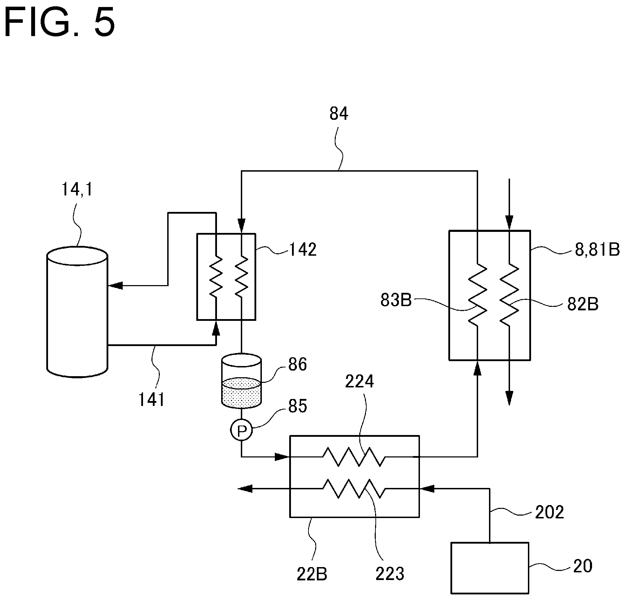

FIG. 5 is a diagram schematically illustrating the regeneration tower 14, the separator 8, and a drive device-side heat exchanger 22B according to an embodiment of the disclosure. As illustrated in FIG. 2 and FIG. 5, in some embodiments, the separator 8 includes a heater 81B configured to perform heat exchange between the first heat transfer medium and a second heat transfer medium via which thermal energy is transmitted to the absorption liquid or the adsorbent. As illustrated in FIG. 2, the liquefier 9 includes the cooler 91 configured to perform heat exchange between the first heat transfer medium and the carbon dioxide gas to cool the carbon dioxide gas.

In the illustrated embodiment, the regeneration tower 14 includes the absorption liquid circulation line 141 for drawing out the absorption liquid stored inside the regeneration tower 14 and then returning the absorption liquid to the regeneration tower 14. The refrigerator 3 further includes a second heat transfer medium-side circulation line 84 configured to circulate the second heat transfer medium. The second heat transfer medium-side circulation line 84 includes a pump 85 for pressurizing the second heat transfer medium. Further, the second heat transfer medium-side circulation line 84 may include a buffer tank 86 for storing the second heat transfer medium. The heater 81B (separator 8) is provided between the compressor 5 and the pre-cooler 63 on the compressed gas line 31B (circulation line 31). The heat exchange performed by the heat exchanger 81B cools the first heat transfer medium flowing in the compressed gas line 31B and heats the second heat transfer medium flowing in the second heat transfer medium-side circulation line 84.

The heater 81B includes a first heat transfer medium-side heat exchange section 82B provided between the compressor 5 and the pre-cooler 63 on the compressed gas line 31B and through which the first heat transfer medium flows, and a second heat transfer medium-side heat exchange section 83B provided on the second heat transfer medium-side circulation line 84 and through which the second heat transfer medium flows. Further, the heater 81B is configured such that heat is transferred from the first heat transfer medium flowing in the first heat transfer medium-side heat exchange section 82A to the second heat transfer medium flowing in the second heat transfer medium-side heat exchange section 83B.

The regeneration tower 14 or the refrigerator 3 includes an absorption liquid-side heater 142 configured to perform heat exchange between the absorption liquid and the second heat transfer medium to heat the absorption liquid. The absorption liquid-side heater 142 performs heat exchange between the second heat transfer medium heated in the second heat transfer medium-side heat exchange section 83B while flowing in the second heat transfer medium-side circulation line 84 and the absorption liquid flowing in the absorption liquid circulation line 141, such that the absorption liquid flowing in the absorption liquid circulation line 141 is heated using the thermal energy generated by the second heat transfer medium. The absorption liquid heated by the absorption liquid-side heater 142 is guided to the regeneration tower 14 via the absorption liquid circulation line 141, and the absorption liquid inside the regeneration tower 14 is heated, which causes the carbon dioxide gas absorbed in the absorption liquid to separate.

According to the configuration described above, heat exchange is performed by the heater 81B between the first heat transfer medium and the second heat transfer medium via which thermal energy is transferred to the absorption liquid or the adsorbent. In other words, the absorption liquid or the adsorbent and the first heat transfer medium undergo indirect heat exchange via the second heat transfer medium (intermediate heat transfer medium). With this configuration, robustness of the first heat transfer medium against fluctuations in thermal energy can be improved and the refrigerator 3 can operate stably.

As illustrated in FIG. 5, in some embodiments, the refrigerator 3 may further include the drive device-side heat exchanger 22B configured to heat the second heat transfer medium by using the thermal energy generated by the drive device 20 (see FIG. 3) for driving the transport vehicle 2. The refrigerator 3 may further include an exhaust gas introduction passage 202 for guiding the exhaust gas generated by at least one of the driving force generation unit or the driving force transmission unit of the drive device 20 to the drive device-side heat exchanger 22B.

The drive device-side heat exchanger 22B is provided downstream of the absorption liquid-side heater 142 on the second heat transfer medium-side circulation line 84 and upstream of the second heat transfer medium-side heat exchange section 83B. The heat exchange performed by the drive device-side heat exchanger 22B heats the absorption liquid flowing in the second heat transfer medium-side circulation line 84.

The drive device-side heat exchanger 22B includes an exhaust gas-side heat exchange section 223 through which the exhaust gas introduced into the drive device-side heat exchanger 22B from the drive device 20 via the exhaust gas introduction passage 202 flows, and a second heat transfer medium-side heat exchange section 224 provided downstream of the absorption-side heater 142 and upstream of the second heat transfer medium-side heat exchange section 83B on the second heat transfer medium-side circulation line 84 and through which the second heat transfer medium flows. Further, the drive device-side heat exchanger 22B is configured such that heat is transferred from the exhaust gas flowing in the exhaust gas-side heat exchange section 223 to the second heat transfer medium flowing in the second heat transfer medium-side heat exchange section 224.

According to the configuration described above, the drive device-side heat exchanger 22B can use waste heat (thermal energy) from the drive device 20 of the transport vehicle 2 as a heat source to heat the second heat transfer medium. With this configuration, since the thermal energy supplied from the refrigerator 3 to the absorption liquid or the adsorbent as a heat source can be reduced, the energy efficiency of the refrigerator 3 can be increased and the running cost of the refrigerator 3 can be reduced.

### (Liquid Carbon Dioxide Introduction Line)

As illustrated in FIG. 2, in some embodiments, the refrigerator 3 further includes a liquid carbon dioxide introduction line 95 for guiding the liquid carbon dioxide liquified by the liquefier 9 to the storage tank 4.

According to the configuration described above, since the liquid carbon dioxide liquified by the liquefier 9 is immediately guided to the storage tank 4 via the liquid carbon dioxide introduction line 95, it is possible to suppress the size and complexity of the refrigerator 3. Note that, the liquid carbon dioxide introduction line 95 may include a pump for pressurizing the liquid carbon dioxide. Additionally, the gas line 94 may include a compressor or blower for pressurizing the carbon dioxide gas.

### (Absorption Liquid-side Storage Tank)

As illustrated in FIG. 6, in some embodiments, the transport vehicle 2 further includes an absorption liquid-side storage tank 23 configured to store the absorption liquid. In the illustrated embodiment, the absorption liquid-side storage tank 23 is mounted on the cargo bed 21 of the transport vehicle 2. The transport vehicle 2 is configured to move to the plant 10 in a state where the absorption liquid that has not yet absorbed the carbon dioxide is stored in the absorption liquid-side storage tank 23.

According to the configuration described above, when the absorption liquid absorbs a certain amount of carbon dioxide, it becomes unable to absorb any more carbon dioxide. When the absorption liquid that has not absorbed any carbon dioxide stored in the absorption liquid-side storage tank 23 is exchanged with the absorption liquid that has absorbed carbon dioxide stored in the facility (plant) 10 for collecting carbon dioxide, the time required to restore the ability of the absorption liquid to absorb carbon dioxide again can be shortened compared to a configuration where the carbon dioxide gas is separated by being heated by the separator 8. As a result, the amount of carbon dioxide collected by the absorption liquid in the facility can be increased.

### (Reliquification System)

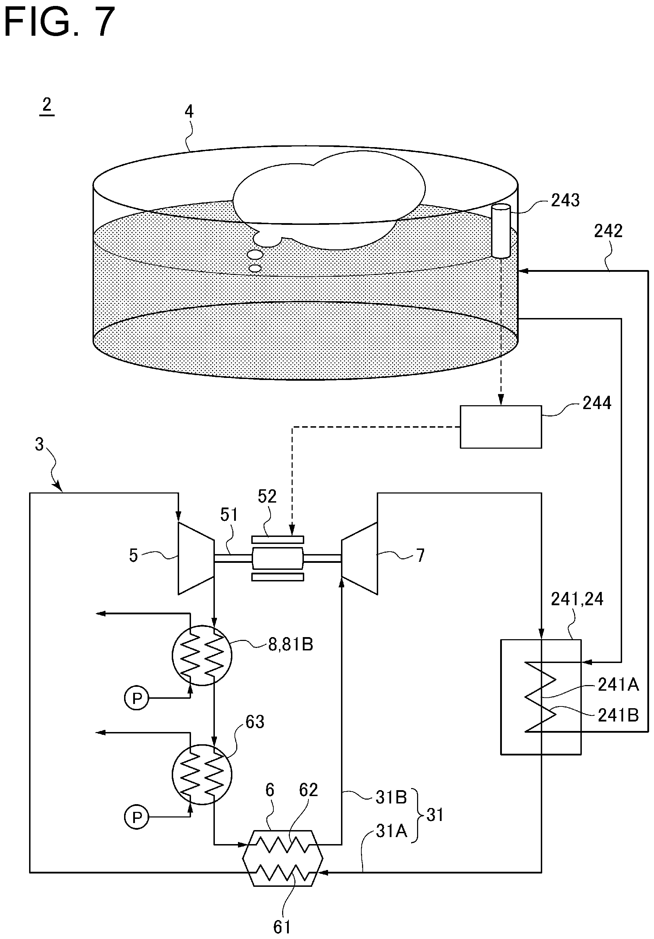

FIG. 7 is a diagram schematically illustrating the transport vehicle 2 according to an embodiment of the disclosure. As illustrated in FIG. 7, in some embodiments, the transport vehicle 2 further includes a reliquification system 24 configured to reliquefy the carbon dioxide gas gasified in the storage tank 4 by the cold energy generated by the first heat transfer medium expanded by the expander 7.

According to the configuration described above, when liquid carbon dioxide is transported by the transport vehicle 2, the liquid carbon dioxide in the storage tank 4 is gasified by the heat entering from outside the storage tank 4, which generates boil-off gas (gasified carbon dioxide gas in the storage tank 4), causing the pressure inside the storage tank 4 to rise. By re-liquefying the boil-off gas using the reliquification system 24, the pressure rise inside the storage tank 4 can be suppressed.

As illustrated in FIG. 7, in some embodiments, the reliquification system 24 includes a reliquefier 241 that performs heat exchange between the first heat transfer medium expanded by the expander 7 and the gasified carbon dioxide gas in the storage tank 4.

In the illustrated embodiment, the storage tank 4 includes a reliquification line 242 that guides the boil-off gas from the storage tank 4 to the reliquefier 241 and guides the liquid carbon dioxide that has been liquified by the boil-off gas in the reliquefier 241 to the storage tank 4. In the illustrated embodiment, the reliquefier 241 is provided between the expander 7 and the low temperature-side heat exchange section 61 (heat exchanger 6) on the expansion gas line 31A (circulation line 31). The heat exchange performed by the reliquefier 241 heats the first heat transfer medium flowing in the expansion gas line 31A and cools and liquifies the boil-off gas. Note that, the reliquefier 241 may be provided either upstream or downstream of the cooler 91 on the expansion gas line 31A, or may be provided on a bypass line that bypasses the cooler 91 on the expansion gas line 31A.

The reliquefier 241 is provided between the expander 7 and the low temperature-side heat exchange section 61 on the expansion gas line 31A, and includes a first heat transfer medium-side heat exchange section 241A through which the first heat transfer medium expanded by the expander 7 flows, and a carbon dioxide gas-side heat exchange section 241B through which carbon dioxide gas (boil-off gas) introduced from the storage tank 4 via the reliquification line 242 flows. Further, the reliquefier 241 is configured such that heat is transferred from the carbon dioxide gas flowing in the carbon dioxide gas-side heat exchange section 241B to the first heat transfer medium flowing in the first heat transfer medium-side heat exchange section 241A.

According to the configuration described above, the boil-off gas (gasified carbon dioxide gas in the storage tank 4) can be liquified by the reliquefier 241 by using the cold energy generated by the first heat transfer medium expanded by the expander 7 of the refrigerator 3 as a cold energy source. With this configuration, dedicated equipment for liquifying the boil-off gas need not be provided in the transport vehicle 2. Further, according to the configuration described above, it is possible to suppress the size and complexity of the transport vehicle 2.

In some embodiments, the compressor 5 includes an electric compressor configured to be driven by the electric motor 52 having variable output. As illustrated in FIG. 7, the reliquification system 24 further includes a pressure acquisition unit (e.g., a pressure sensor) 243 configured to acquire the pressure inside the storage tank 4, and a control device 244 configured to adjust output of the electric motor 52 according to the pressure inside the storage tank 4 acquired by the pressure acquisition unit 243. The control device 244 includes a control unit for controlling the output of the electric motor 52. The control device 244 adjusts the output of the electric motor 52 stepwise or continuously according to the pressure inside the storage tank 4 acquired by the pressure acquisition unit 243.

According to the configuration described above, when the boil-off gas (gasified carbon dioxide gas in the storage tank 4) is generated, the pressure inside the storage tank 4 rises in line with the amount of boil-off gas generated. Here, the amount of boil-off gas generated fluctuates according to factors such as the outside temperature. The pressure inside the storage tank 4 is monitored by the pressure acquisition unit 243, and the output of the electric motor 52 is increased by the control device 244 in accordance with the gradient of the increase in pressure (degree of increase) inside the storage tank 4, which increases the cold energy in the reliquefier 241. With this configuration, by adjusting the output of the electric motor 52 using the control device 244, the boil-off gas can be efficiently reliquified by the reliquefier 241 in accordance with the amount of boil-off gas generated.

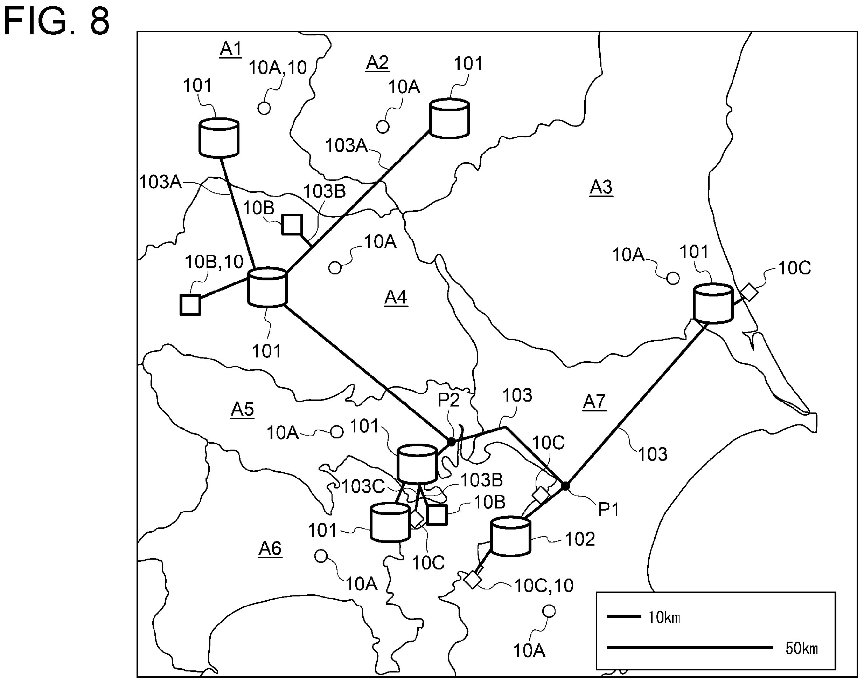

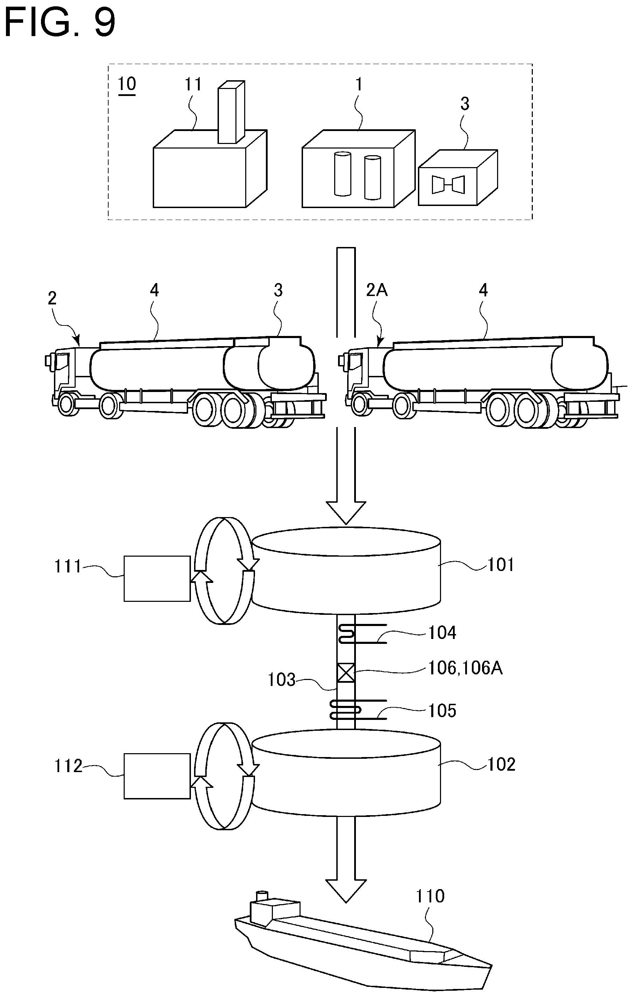

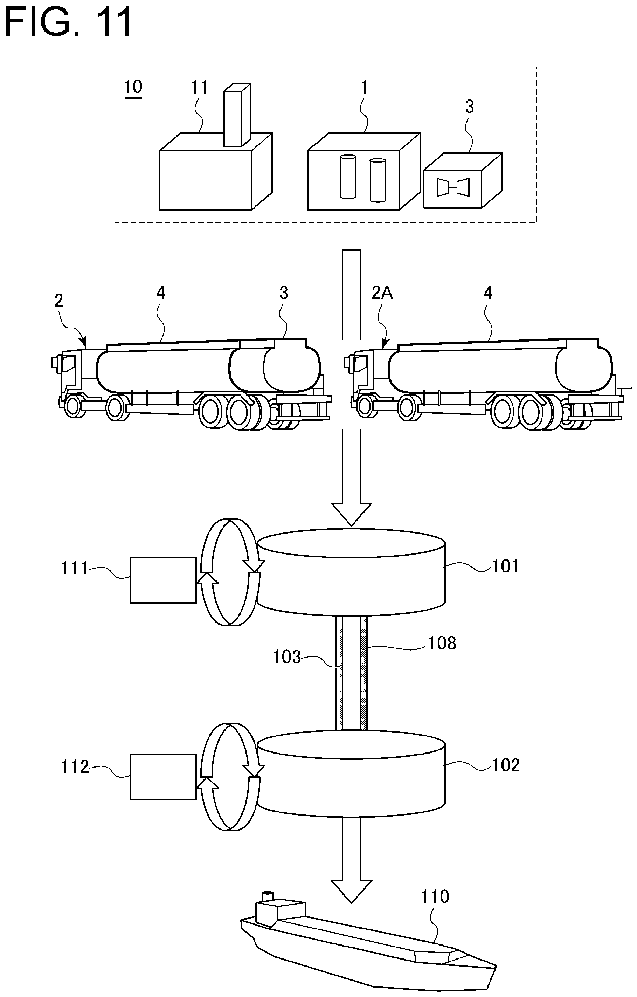

FIG. 8 is an explanatory diagram illustrating an example arrangement of a facility, a first tank 101, and a second tank 102 used in the carbon dioxide transport method according to an embodiment of the disclosure. FIGS. 9 to 11 are each explanatory diagrams illustrating the carbon dioxide transport method according to an embodiment of the disclosure. The carbon dioxide collection method according to some embodiments is a carbon dioxide transport method for transporting carbon dioxide, and includes a first transfer step and a second transfer step.

The liquid carbon dioxide is collected at the facility (e.g., a plant) 10 for collecting carbon dioxide included in exhaust gas exhausted from the combustion device 11. As illustrated in FIGS. 8 to 11, in the first transfer step described above, the liquid carbon dioxide collected at the facility 10 is transferred to a first tank (relay tank) 101 installed in a remote location from the facility 10. The first tank 101 stores liquid carbon dioxide collected from multiple facilities 10. The first tank 101 is located outside of the premises of the facilities 10.

The first transfer step described above includes a transport vehicle delivery step in which the liquid carbon dioxide is stored in the storage tank 4 mounted in the transfer vehicle 2, and the liquid carbon dioxide stored in the storage tank 4 is delivered to the first tank 101 by the transfer vehicle 2. At each facility 10, the liquid carbon dioxide collected at the facility 10 is transferred to the storage tank 4 mounted in the transport vehicle 2. Then, the liquid carbon dioxide stored in the storage tank 4 is delivered to the first tank 101 by the transport vehicle 2. Specifically, the transport vehicle 2 drives from the facility 10 to the location where the first tank 101 is installed and the liquid carbon dioxide is transferred from the storage tank 4 to the first tank 101 at the location where the first tank 101 is installed. This delivery of liquid carbon dioxide by the transport vehicle 2 is repeated such that liquid carbon dioxide is collected from multiple facilities 10 and transferred to the first tank 101.

Note that, in the transport vehicle delivery step, the liquid carbon dioxide may be collected from the carbon dioxide collection device 1 at a facility 10 that does not have a refrigerator 3 by a transport vehicle 2 that has a refrigerator 3 and a storage tank 4, or the liquid carbon dioxide may be collected from the carbon dioxide collection device 1 at a facility 10 that has a refrigerator 3 by a transport vehicle 2A that has a storage tank 4 and does not have a refrigerator 3.

The first tank 101 can store liquid carbon dioxide collected by multiple transport vehicles 2, 2A from multiple facilities 10. The first tank 101 includes a reliquification system 111 configured to reliquify the boil-off gas, which is gasified liquid carbon dioxide, inside the first tank 101. The first tank 101 is installed in a location where the time required for the transport vehicle 2, 2A to deliver the liquid carbon dioxide from the facility 10 to the first tank 101 is shorter than that for the transport vehicle 2, 2A to deliver the liquid carbon dioxide to the second tank 102, which will be described below.

As illustrated in FIGS. 8 to 11, in the second transfer step described above, the liquid carbon dioxide is transferred from the first tank 101 to the second tank (port tank) 102 via a first pipeline 103 connecting the first tank 101 and the second tank 102, which is installed in a remote location from the first tank 101. The second tank 102 can store liquid carbon dioxide transferred from each of the first tanks 101 in multiple locations via the pipeline 103. In the illustrated embodiment, each of the plurality of first tanks 101 is installed at a location at least 10 km away from the second tank 102 in a straight line. Each of the plurality of first tanks 101 is located closer to the facility 10 than the second tank 102 in a straight line.

As illustrated in FIG. 8, the plurality of first pipelines 103 connecting each of the plurality of first tanks 101 and the second tank 102 may have junctions P1 and P2 with other first pipelines 103, and the piping between the junctions P1 and P2 and the second tank 102 may be shared with other first pipelines 103. Further, the plurality of first pipelines 103 connecting each of the plurality of first tanks 101 and the second tank 102 may include a relay line 103A connecting one of the plurality of first tanks 101 to another of the plurality of first tanks 101.

The second tank 102 includes a reliquification system 112 configured to reliquefy the boil-off gas, which is gasified liquid carbon dioxide, inside the second tank 102. The second tank 102 is installed in a location suited for delivery of the liquid carbon dioxide stored in the second tank 102. In the illustrated embodiment, the second tank 102 is installed in a coastal location. The coastal location is within 50 km in a straight line from a port where a ship 110 can dock. Further, the second tank 102 is preferably installed near a port, and in some embodiments, it is installed within 10 km in a straight line from the port. In this case, since the second tank 102 is installed in a coastal location, the liquid carbon dioxide stored in the second tank 102 can be easily transferred to the ship 110. The liquid carbon dioxide can then be delivered to various destinations by the ship 110. In some other embodiments, the liquid carbon dioxide stored in the second tank 102 may be delivered by rail, in which case the second tank 102 is preferably installed within 50 km (preferably within 10 km) in a straight line from a station where a rail car can stop.

The carbon dioxide collection method according to some embodiments includes the first transfer step including the transport vehicle delivery step and the second transfer step. According to the method described above, since the first transfer step is included, the liquid carbon dioxide collected at the facility 10 can be sent to the first tank 101 by the transport vehicle 2 or the like. Further, since the second transfer step is included, the liquid carbon dioxide amassed in the first tank 101 can be transferred to the second tank 102 via the first pipeline 103. With this configuration, by temporarily amassing the liquid carbon dioxide collected at the facility 10 in the first tank 101, it is possible to collect the liquid carbon dioxide efficiently as compared to directly transferring the liquid carbon dioxide from the facility 10 to the second tank 102. For example, it is not necessary to deliver the liquid carbon dioxide from the facility 10 to the second tank 102 using the transport vehicle 2.

As illustrated in FIG. 8, in some embodiments, the first transport step may further include a pipeline transport step in addition to the transport vehicle delivery step described above. In the pipeline transport step, the liquid carbon dioxide is transported from the large-scale facilities 10B and 10C, which are used for collecting carbon dioxide included in exhaust gas exhausted from the combustion device 11 that exhausts exhaust gas in a predetermined amount or higher, to the first tank 101 via second pipelines 103B and 103C, which connect the large-scale facilities 10B and 10C to the first tank 101.

The liquid carbon dioxide is preferably delivered from small-scale facilities 10 (10A), where the amount of exhaust gas exhausted from the combustion device 11 is less than a predetermined amount, for example, less than 300 tpd (tons per day), to the first tank 101 by the transport vehicle 2, 2A in terms of transfer costs. The liquid carbon dioxide is preferably delivered from large-scale facilities 10 (10B, 10C), where the amount of exhaust gas exhausted from the combustion device 11 is 300 tpd (tons per day) or more, for example, to the first tank 101 by the second pipelines 103B, 103C rather than by the transport vehicle 2, 2A in terms of transfer costs.

Examples of the large-scale facility 10 (10B, 10C) include a cement factory 10B and a steel mill 10C. The second pipelines 103B and 103C include the pipeline 103B connecting the first tank 101 and the cement factory 10B, and the pipeline 103C connecting the first tank 101 and the steel mill 10C. Further, the second pipelines 103B and 103C may be configured to merge with the first pipeline 103.

According to the method described above, a large amount of liquid carbon dioxide is collected at the large-scale facility 10B, 10C in response to a large amount of exhaust gas exhausted from the combustion device 11. When transferring large quantities of carbon dioxide, it is preferable to transport the carbon dioxide via the second pipelines 103B, 103C rather than by the transport vehicle 2, 2A in terms of transfer costs.

As illustrated in FIG. 8, in some embodiments, at least one of the first tanks 101 is installed corresponding to one of a plurality of collection areas A1 to A7, which are pre-divided for respective administrative districts. In the first transfer step described above, the liquid carbon dioxide is transferred from a facility 10 present in one of the collection areas A1 to A7 (e.g., A1) to the first tank 101 corresponding to the collection area (e.g., A1) in which the facility 10 is present. It is preferable that the first tanks 101 corresponding to each of the multiple collection areas A1 to A7 be installed in the corresponding collection area.

According to the method described above, the liquid carbon dioxide collected at the facility 10 located in the collection area (e.g., A1) for each administrative district (collection areas A1 to A7) can be amassed in a first tank 101 corresponding to that collection area (e.g., A1). By amassing the liquid carbon dioxide for each administrative district (collection areas A1 to A7), the administrative authority in charge of collecting liquid carbon dioxide from each facility 10 is clear, and it is possible to efficiently collect liquid carbon dioxide.

As illustrated in FIG. 8, the plurality of collection areas A1 to A7 that are pre-divided for respective administrative districts may be divided for respective prefectural areas. In this case, it is possible to efficiently collect liquid carbon dioxide by collecting liquid carbon dioxide in the corresponding first tank 101 for each prefecture.

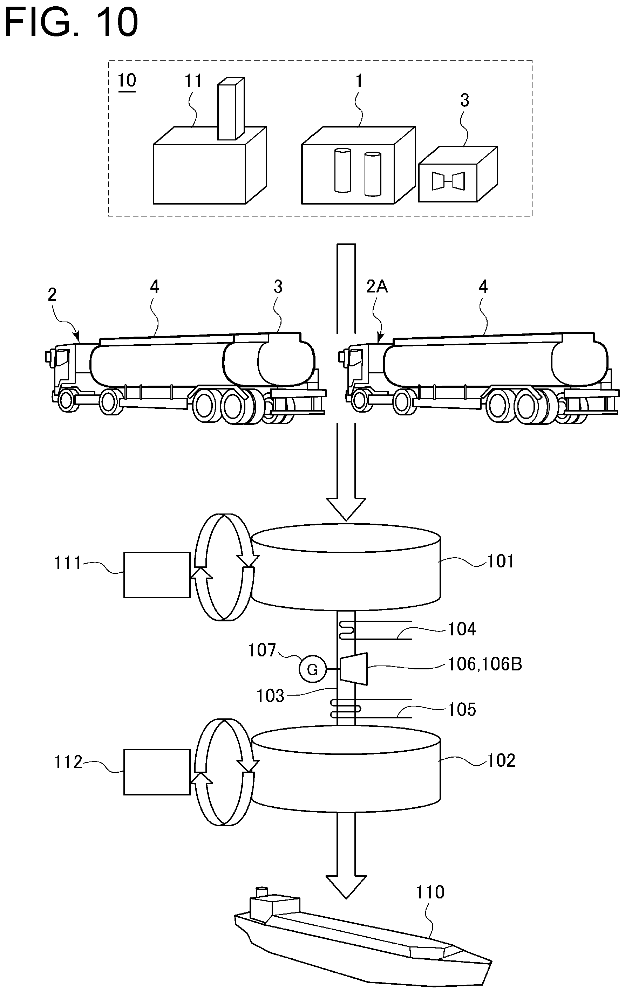

As illustrated in FIG. 9 and FIG. 10, in some embodiments, the second transfer step described above includes a pipeline-side gasification step of gasifying the liquid carbon dioxide flowing in the first pipeline 103 by using a pipeline-side gasifier 104, and a pipeline-side liquification step of liquifying the carbon dioxide gas gasified in the pipeline-side gasification step by using a pipeline-side liquefier 105.

The pipeline-side gasifier 104 is provided on the first tank 101 side (near the first tank 101) on the first pipeline 103. The pipeline-side gasifier 104 may, for example, be a compressor configured to pressurize and gasify the liquid carbon dioxide flowing in the first pipeline 103. The pipeline-side liquefier 105 is provided on the second tank 102 side (near the second tank 102) on the first pipeline 103. The piping between the pipeline-side gasifier 104 and the pipeline-side liquefier 105 in the first pipeline 103 is configured to allow the carbon dioxide gas produced by gasifying the liquid carbon dioxide in the pipeline-side gasifier 104 to flow through. The pipeline-side liquefier 105 may be a refrigerator, for example, that is configured to cool and liquify the carbon dioxide gas.

In order to promote liquification of the carbon dioxide gas in the pipeline-side liquefier 105, a pipeline-side decompressor 106 (106A, 106B) configured to decompress the carbon dioxide gas may be installed between the pipeline-side gasifier 104 and the pipeline-side liquefier 105 on the first pipeline 103. The pipeline-side decompressor 106 may be a decompression valve 106A as illustrated in FIG. 8. In this case, the pipeline-side decompressor 106 decompresses the carbon dioxide gas, which is then introduced into the pipeline-side liquefier 105.

According to the method described above, the carbon dioxide gas generated by gasifying the liquid carbon dioxide in the first pipeline 103 can be transferred. Specifically, in the first pipeline 103, the carbon dioxide gas gasified by the pipeline-side gasifier 104 can be sent toward the second tank 102. Further, in the first pipeline 103, the carbon dioxide gas flowing in the first pipeline 103 can be introduced into the second tank 102 after being liquified by the pipeline-side liquefier 105. With this configuration, the effect of heat entering from outside the first pipeline 103 is smaller than when the liquid carbon dioxide is transferred in liquid form in the first pipeline 103. Thus, heat insulation treatment on the first pipeline 103 can be omitted.

As illustrated in FIG. 9, in some embodiments, the second transfer step described above further includes a pipeline-side decompression step of decompressing the carbon dioxide gas gasified in the pipeline-side gasification step by using a pipeline-side expander 106B connected to a generator 107. In other words, the pipeline-side decompressor 106 may be the pipeline-side expander 106B.

According to the method described above, by using the pipeline-side expander 106B connected to the generator 107 to decompress the carbon dioxide gas flowing in the first pipeline 103, it is possible to collect electricity using the generator 107. The electricity collected by the generator 107 can be supplied to the reliquification system 111 of the first tank 101, the reliquification system 112 of the second tank 102, or the pipeline-side liquefier 105, thereby reducing the power required to drive these devices and equipment.

As illustrated in FIG. 10, in some embodiments, in the second transfer step described above, the liquid carbon dioxide is transferred from the first tank 101 to the second tank 102 as a liquid. In other words, the liquid carbon dioxide is configured to flow through the first pipeline 103. In order to suppress the heat entering from outside the first pipeline 103 to the liquid carbon dioxide flowing in the first pipeline 103, it is preferable to attach a heat insulating material 108 to the outside of the first pipeline 103.

According to the method described above, since the liquid carbon dioxide can be transferred in the first pipeline 103 as a liquid, the diameter of the piping constituting the first pipeline 103 can be made smaller compared to a case where the carbon dioxide gas is transferred in the first pipeline 103. Note that, the second pipelines 103B and 103C may also be configured to transfer the liquid carbon dioxide in a liquid state, similar to the first pipeline 103, or may be configured to transfer gasified carbon dioxide gas.

Herein, expressions that indicate relative or absolute placement, such as "in a certain direction," "along a certain direction," "parallel," "orthogonal," "center," "concentric," or "coaxial," shall not only indicate such placement, but also indicate a state in which there is relative displacement with a tolerance or an angle or distance to the extent that the same function can be obtained.

For example, expressions such as "identical", "equal", and "homogeneous" that indicate that things are equal shall not only indicate that they are exactly equal, but shall also indicate that there is a difference in tolerance or a difference in degree that allows the same function to be obtained.

In addition, herein, expressions that describe shapes such as square or cylindrical shapes shall not only describe shapes such as square or cylindrical shapes in a geometrically exact sense, but shall also describe shapes that include concave or convex portions or chamfered portions, etc., to the extent that the same effect is obtained.

In addition, herein, expressions such as "comprising," "including," or "having" a single component shall not be exclusive expressions that exclude the existence of other components.

The present disclosure is not limited to the embodiments described above, and includes an embodiment obtained by modifying the embodiments described above, and an appropriate combination thereof.

The content described in some of the above-mentioned embodiments is understood as follows, for example.
1: A transport vehicle (2) according to at least one embodiment of the disclosure is a transport vehicle (2) for transporting liquid carbon dioxide, the transport vehicle (2) including:
   a refrigerator (3) configured to liquidize carbon dioxide gas; and
   a storage tank (4) configured to store liquid carbon dioxide, wherein
   the refrigerator (3) includes:
      a compressor (5) configured to compress a first heat transfer medium;
      a heat exchanger (6) configured to cool the first heat transfer medium compressed by the compressor (5);
      an expander (7) configured to expand the first heat transfer medium cooled by the heat exchanger (6);
      a separator (8) configured to separate carbon dioxide gas from an absorption liquid that has absorbed the carbon dioxide or an adsorbent onto which the carbon dioxide is adsorbed, by using thermal energy generated by the first heat transfer medium compressed by the compressor (5); and
      a liquefier (9) configured to liquify the carbon dioxide gas separated from the absorption liquid or the adsorbent by the separator (8), by using cold energy generated by the first heat transfer medium expanded by the expander (7).

According to the configuration described in 1 above, the carbon dioxide gas separated from the absorption liquid or the adsorbent can be liquified by the liquefier (9) by using the cold energy generated by the first heat transfer medium expanded by the expander (7) of the refrigerator (3) as a cold energy source. Further, the carbon dioxide gas can be separated from the absorption liquid or the adsorbent by the separator (8) by using the thermal energy generated by the first heat transfer medium compressed by the compressor (5), which is waste heat of the refrigerator (3). In this case, since the waste heat of the refrigerator (3) is used, the load placed on the boiler equipment that supplies the heat source to the absorption liquid or the adsorbent can be reduced, or the boiler equipment can be omitted. According to the configuration described in 1 above, since both the heat source and the cold energy source can be supplied from the refrigerator (3), it is possible to suppress the size and complexity of the facility (10) for collecting the carbon dioxide included in the exhaust gas.

Further, according to the configuration described in 1 above, even in a case where a refrigerator is not provided in the facility for collecting the carbon dioxide, a heat source can be provided to the absorption liquid or adsorbent from the refrigerator (3) mounted in the transport vehicle (2), and a cold energy source can be provided for the carbon dioxide gas. Thus, according to the configuration described in 1 above, even in a case where a refrigerator is not provided in the facility for collecting the carbon dioxide, it is possible to suppress the size and complexity of the facility.

2. In some embodiments, in the transport vehicle (2) according to 1 described above, the separator (8) includes a heater (81A) configured to perform heat exchange between the absorption liquid or the adsorbent and the first heat transfer medium to heat the absorption liquid or the adsorbent, and
the liquefier (9) includes a cooler (91) configured to perform heat exchange between the first heat transfer medium and the carbon dioxide gas to cool the carbon dioxide gas.

According to the configuration described in 2 above, heat exchange is directly performed by the heater (81A) between the absorption liquid or the adsorbent and the first heat transfer medium. Further, heat exchange is directly performed by the cooler (91) between the first heat transfer medium and the carbon dioxide gas. With this configuration, the number of heat exchangers that make up the refrigerator (3) can be reduced, and thus the size, complexity, and cost of the refrigerator (3) can be reduced.

3. In some embodiments, in the transport vehicle (2) according to 1 described above, the separator (8) includes a heater (81B) configured to perform heat exchange between the first heat transfer medium and a second heat transfer medium via which thermal energy is transferred to the absorption liquid or the adsorbent, to thereby heat the second heat transfer medium, and
the liquefier (9) includes a cooler (91) configured to perform heat exchange between the first heat transfer medium and the carbon dioxide gas to cool the carbon dioxide gas.

According to the configuration described in 3 above, heat exchange is performed by the heater (81B) between the first heat transfer medium and the second heat transfer medium via which thermal energy is transferred to the absorption liquid or the adsorbent. In other words, the absorption liquid or the adsorbent and the first heat transfer medium undergo indirect heat exchange via the second heat transfer medium (intermediate heat transfer medium). With this configuration, robustness of the first heat transfer medium against fluctuations in thermal energy can be improved and the refrigerator (3) can operate stably.

4. In some embodiments, in the transport vehicle (2) according to 2 described above, the refrigerator (3) further includes a drive device-side heat exchanger (22A) configured to heat the absorption liquid or the adsorbent by using thermal energy generated by a drive device (20) configured to drive the transport vehicle (2).

According to the configuration described in 4 above, the drive device-side heat exchanger (22A) can use waste heat (thermal energy) from the drive device (20) of the transport vehicle (2) as a heat source to heat the absorption liquid or the adsorbent. With this configuration, since the thermal energy supplied from the refrigerator (3) to the absorption liquid or the adsorbent as a heat source can be reduced, the energy efficiency of the refrigerator (3) can be increased and the running cost of the refrigerator (3) can be reduced.

5. In some embodiments, in the transport vehicle (2) according to 3 described above, the refrigerator (3) further includes a drive device-side heat exchanger (22B) configured to heat the second heat transfer medium by using thermal energy generated by a drive device (20) configured to drive the transport vehicle (2).

According to the configuration described in 5 above, the drive device-side heat exchanger (22B) can use waste heat (thermal energy) from the drive device (20) of the transport vehicle (2) as a heat source to heat the second heat transfer medium. With this configuration, since the thermal energy supplied from the refrigerator (3) to the absorption liquid or the adsorbent as a heat source can be reduced, the energy efficiency of the refrigerator (3) can be increased and the running cost of the refrigerator (3) can be reduced.

6. In some embodiments, in the transport vehicle (2) according to any one of 1 to 5 described above, the refrigerator (3) further includes a liquid carbon dioxide introduction line (95) for guiding the liquid carbon dioxide liquified by the liquefier (9) to the storage tank (4).

According to the configuration described in 6 above, since the liquid carbon dioxide liquified by the liquefier (9) is immediately guided to the storage tank (4) via the liquid carbon dioxide introduction line (95), it is possible to suppress the size and complexity of the refrigerator (3).

7. In some embodiments, the transport vehicle (2) according to any one of 1 to 6 described above further includes an absorption liquid-side storage tank (23) configured to store the absorption liquid.

According to the configuration described in 7 above, when the absorption liquid absorbs a certain amount of carbon dioxide, it becomes unable to absorb any more carbon dioxide. When the absorption liquid that has not absorbed any carbon dioxide stored in the absorption liquid-side storage tank (23) is exchanged with the absorption liquid that has absorbed carbon dioxide stored in the facility (10) for collecting carbon dioxide, the time required to restore the ability of the absorption liquid to absorb carbon dioxide again can be shortened compared to a configuration where the carbon dioxide gas is separated by being heated by the separator (8). As a result, the amount of carbon dioxide collected by the absorption liquid in the facility can be increased.

8. In some embodiments, the transport vehicle (2) according to any one of 1 to 7 described above further includes a reliquification system (24) configured to reliquify gasified carbon dioxide gas in the storage tank (4) by using cold energy generated by the first heat transfer medium expanded by the expander (7).

According to the configuration described in 8 above, when liquid carbon dioxide is transported by the transport vehicle (2), the liquid carbon dioxide in the storage tank (4) is gasified by the heat entering from outside the storage tank (4), which generates boil-off gas (gasified carbon dioxide gas in the storage tank (4)), causing the pressure inside the storage tank (4) to rise. By re-liquefying the boil-off gas using the reliquification system (24), the pressure rise inside the storage tank (4) can be suppressed.

9. In some embodiments, in the transport vehicle (2) according to 8 described above, the reliquification system (24) includes a reliquefier (241) configured to perform heat exchange between the first heat transfer medium expanded by the expander (7) and the gasified carbon dioxide gas in the storage tank (4).

According to the configuration described in 9 above, the boil-off gas (gasified carbon dioxide gas in the storage tank (4)) can be liquified by the reliquefier (241) by using the cold energy generated by the first heat transfer medium expanded by the expander (7) of the refrigerator (3) as a cold thermal source. With this configuration, dedicated equipment for liquifying the boil-off gas need not be provided in the transport vehicle (2). Further, according to the configuration described in 9 above, it is possible to suppress the size and complexity of the transport vehicle (2).

10. In some embodiments, in the transport vehicle (2) according to 9 described above, the compressor (5) includes an electric compressor configured to be driven by an electric motor (52) having variable output, and
the reliquification system (24) further includes
a pressure acquisition unit (243) configured to acquire a pressure inside the storage tank (4), and
a control device (244) configured to adjust output of the electric motor (52) according to the pressure inside the storage tank (4) acquired by the pressure acquisition unit (243).

According to the configuration described in 10 above, when the boil-off gas (gasified carbon dioxide gas in the storage tank (4)) is generated, the pressure inside the storage tank (4) rises in line with the amount of boil-off gas generated. Here, the amount of boil-off gas generated fluctuates according to factors such as the outside temperature. The pressure inside the storage tank (4) is monitored by the pressure acquisition unit (243), and the output of the electric motor (52) is increased by the control device (244) in accordance with the gradient of the increase in pressure (degree of increase) inside the storage tank (4), which increases the cold energy in the reliquefier (241). With this configuration, by adjusting the output of the electric motor (52) using the control device (244), the boil-off gas can be efficiently reliquified by the reliquefier (241) in accordance with the amount of boil-off gas generated.

11. A carbon dioxide collection method according to at least one embodiment of the disclosure is a carbon dioxide collection method for collecting carbon dioxide included in exhaust gas exhausted from a combustion device (11), the method including:
a carbon dioxide extraction step of causing the carbon dioxide included in the exhaust gas to be adsorbed by an absorption liquid or causing the carbon dioxide included in the exhaust gas to be adsorbed onto an adsorbent;
a compression step of compressing a first heat transfer medium by using a compressor (5) in a refrigerator (3) mounted in a transport vehicle (2) for transporting liquid carbon dioxide;
a cooling step of cooling the first heat transfer medium compressed by the compressor by using a heat exchanger (6) in the refrigerator (3);
an expansion step of expanding the first heat transfer medium cooled by the heat exchanger by using an expander (7) in the refrigerator (3);
a separation step of separating carbon dioxide gas from the absorption liquid that has absorbed the carbon dioxide or the adsorbent onto which the carbon dioxide is adsorbed, by using thermal energy generated by the first heat transfer medium compressed by the compressor (5); and
a liquification step of liquifying the carbon dioxide gas separated from the absorption liquid or the adsorbent in the separation step, by using cold energy generated by the first heat transfer medium expanded by the expander (7).

According to the method described in 11 above, the carbon dioxide gas separated from the absorption liquid or the adsorbent can be liquified in the liquification step by using the cold energy generated by the first heat transfer medium expanded by the expander (7) of the refrigerator (3) as a cold energy source. Further, the carbon dioxide gas can be separated from the absorption liquid or the adsorbent in the separation step by using the heat energy generated by the first heat transfer medium compressed by the compressor (5), which is waste heat of the refrigerator (3), as a heat source. In this case, since the waste heat of the refrigerator (3) is used, the load placed on the boiler equipment that supplies the heat source can be reduced, or the boiler equipment can be omitted. According to the configuration described in 11 above, since both the heat source and the cold energy source can be supplied from the refrigerator (3), it is possible to suppress the size and complexity of the facility for collecting the carbon dioxide included in the exhaust gas.

Further, according to the method described in 11 above, even in a case where a refrigerator is not provided in the facility for collecting the carbon dioxide, a heat source can be provided to the absorption liquid or adsorbent from the refrigerator (3) mounted in the transport vehicle (2), and a cold energy source can be provided for the carbon dioxide gas. Thus, according to the configuration described in 11 above, even in a case where a refrigerator is not provided in the facility for collecting the carbon dioxide, it is possible to suppress the size and complexity of the facility.

12. A carbon dioxide collection method according to at least one embodiment of the disclosure is a carbon dioxide transport method for transporting carbon dioxide, the method including:
a first transfer step of transferring liquid carbon dioxide collected at a facility (10) for collecting carbon dioxide included in exhaust gas exhausted from a combustion device (11), to a first tank (101) disposed in a remote location far from the facility; and
a second transfer step of transferring the liquid carbon dioxide from the first tank (101) to a second tank (102) via a first pipeline (103) connecting the first tank (101) and the second tank (102), the second tank (102) being disposed in a remote location far from the first tank (101), in which
the first transfer step includes a transport vehicle delivery step of storing the liquid carbon dioxide in a storage tank (4) mounted in a transport vehicle (2) and using the transport vehicle (2) to deliver the liquid carbon dioxide stored in the storage tank (4) to the first tank (101).

According to the method described in 12 above, since the first transfer step is included, the liquid carbon dioxide collected at the facility (10) can be sent to the first tank (101) by the transport vehicle (2) or the like. Further, since the second transfer step is included, the liquid carbon dioxide amassed in the first tank (101) can be transferred to the second tank (102) via the first pipeline (103). With this configuration, by temporarily amassing the liquid carbon dioxide collected at the facility (10) in the first tank (101), it is possible to collect the liquid carbon dioxide efficiently as compared to directly transferring the liquid carbon dioxide from the facility (10) to the second tank (102).

13. In some embodiments, in the carbon dioxide transport method according to 12 described above, the second transfer step includes
a pipeline-side gasification step of gasifying the liquid carbon dioxide flowing in the first pipeline (103) by using a pipeline-side gasifier (104), and
a pipeline-side liquification step of liquifying carbon dioxide gas gasified in the pipeline-side gasification step by using a pipeline-side liquefier (105).

According to the method described in 13 above, the carbon dioxide gas generated by gasifying the liquid carbon dioxide in the first pipeline (103) can be transferred. Specifically, in the first pipeline (103), the carbon dioxide gas gasified by the pipeline-side gasifier (104) can be sent toward the second tank (102). Further, in the first pipeline (103), the carbon dioxide gas flowing in the first pipeline (103) can be introduced into the second tank (102) after being liquified by the pipeline-side liquefier (105). With this configuration, the effect of heat entering from outside the first pipeline (103) is smaller than when the liquid carbon dioxide is transferred in liquid form in the first pipeline (103). Thus, heat insulation treatment on the first pipeline (103) can be omitted.

14. In some embodiments, in the carbon dioxide transport method according to 13 described above, the second transfer step further includes a pipeline-side decompression step of decompressing the carbon dioxide gas gasified in the pipeline-side gasification step by using a pipeline-side expander (106B) connected to a generator (107).

According to the method described in 14 above, by using the pipeline-side expander (106B) connected to the generator (107) to decompress the carbon dioxide gas flowing in the first pipeline (103), it is possible to collect electricity using the generator (107). The electricity collected by the generator (107) can be supplied to the reliquification system (111) of the first tank (101), the reliquification system (112) of the second tank (102), or the pipeline-side liquefier (105), thereby reducing the power required to drive these devices and equipment.

15. In some embodiments, in the carbon dioxide transport method according to 12 described above, in the second transfer step, the liquid carbon dioxide is transferred from the first tank (101) to the second tank (102) as a liquid.

According to the method described in 15 above, since the liquid carbon dioxide can be transferred in the first pipeline (103) as a liquid, the diameter of the piping constituting the first pipeline (103) can be made smaller compared to a case where the carbon dioxide gas is transferred in the first pipeline (103).

16. In some embodiments, in the carbon dioxide transport method according to any one of 12 to 15 described above, the first transfer step further includes a pipeline transport step of transporting the liquid carbon dioxide from a large-scale facility (10B, 10C) to the first tank (101) via a second pipeline (103B, 103C) connecting the large-scale facility (10B, 10C) and the first tank (101), the large-scale facility (10B, 10C) being a facility for collecting carbon dioxide included in exhaust gas exhausted from a combustion device (11) that exhausts exhaust gas in a predetermined amount or higher.

According to the method described in 16 above, a large amount of liquid carbon dioxide is collected at the large-scale facility (10B, 10C) in response to a large amount of exhaust gas exhausted from the combustion device (11). When transferring large quantities of carbon dioxide, it is preferable to transport the carbon dioxide via the second pipelines (103B, 103C) rather than by the transport vehicle (2, 2A) in terms of transfer costs.

17. In some embodiments, in the carbon dioxide transport method according to any one of 12 to 16 described above, one or more of the first tanks (101) are provided, each of the first tanks (101) corresponding to one of a plurality of collection areas (A1 to A7) pre-divided for respective administrative districts, and
in the first transfer step, the liquid carbon dioxide is transferred from a facility (10) for collecting the carbon dioxide to the first tank (101) corresponding to the collection area (e.g. A1) containing the facility (10), the facility (10) being located in each of the plurality of collection areas (A1 to A7).

According to the method described in 17 above, the liquid carbon dioxide collected at the facility (10) located in the collection area (e.g., A1) for each administrative district (collection areas A1 to A7) can be amassed in a first tank (101) corresponding to that collection area (e.g., A1). By amassing the liquid carbon dioxide for each administrative district (collection areas A1 to A7), the administrative authority in charge of collecting liquid carbon dioxide from each facility (10) is clear, and it is possible to efficiently collect liquid carbon dioxide.

18. In some embodiments, in the carbon dioxide transport method according to 17 described above, the plurality of collection areas are divided for respective prefectural areas.

According to the method described in 18 above, it is possible to efficiently collect liquid carbon dioxide by collecting liquid carbon dioxide in the corresponding first tank (101) for each prefecture.

19. In some embodiments, in the carbon dioxide transport method according to any one of 12 to 18 described above, the second tank (102) is disposed in a coastal location.

According to the method described in 19 above, since the second tank (102) is installed in a coastal location, the liquid carbon dioxide stored in the second tank (102) can be easily transferred to a ship (110). The liquid carbon dioxide can then be delivered to various destinations by the ship (110).

### Reference Signs List

1 Carbon dioxide collection device
2, 2A Transport vehicle
3 Refrigerator
4 Storage tank
5 Compressor
6 Heat exchanger
7 Expander
8 Separator
9 Liquefier
10 Facility
11 Combustion device
12 Absorption tower
13 Cooling tower
14 Regeneration tower
20 Drive device
21 Cargo bed
22A, 22B Drive device-side heat exchanger
23 Absorption liquid-side storage tank
24, 111, 112 Reliquification system
31 Circulation line
31A Expansion gas line
31B Compression gas line
51 Rotating shaft
52 Electric motor
61 Low temperature-side heat exchanger
62 High temperature-side heat exchanger
63 Pre-heater
81A, 81B Heater
82A, 82B, 92, 241A First heat transfer medium-side heat exchange section
83A, 222 Absorption liquid-side heat exchange section
83B, 224 Second heat transfer medium-side heat exchange section
84 Second heat transfer medium-side circulation line
85 Pump
86 Buffer tank
91 Cooler
93, 241B Carbon dioxide gas-side heat exchange section
94 Gas line
95 Liquid carbon dioxide introduction line
100 Transport destination
101 First tank
102 Second tank
103 Pipeline
104 Pipeline-side gasifier
105 Pipeline-side liquefier
106 Pipeline-side decompressor
106ADecompression valve
106B Pipeline-side expander
107 Generator
108 Heat insulating material
110 Ship
131 Cooling water circulation line
132 Cooling water cooler
141 Absorption liquid circulation line
142 Absorption liquid-side heater
201, 202 Exhaust gas introduction passage
221, 223 Exhaust gas-side heat exchange section
241 Reliquefier
242 Reliquification line
243 Pressure acquisition unit
244 Control device

## Claims

1. A transport vehicle for transporting liquid carbon dioxide, the transport vehicle comprising:
a refrigerator configured to liquidize carbon dioxide gas; and
a storage tank configured to store liquid carbon dioxide, wherein
the refrigerator includes:
a compressor configured to compress a first heat transfer medium;
a heat exchanger configured to cool the first heat transfer medium compressed by the compressor;
an expander configured to expand the first heat transfer medium cooled by the heat exchanger;
a separator configured to separate carbon dioxide gas from an absorption liquid that has absorbed the carbon dioxide or an adsorbent onto which the carbon dioxide is adsorbed, by using thermal energy generated by the first heat transfer medium compressed by the compressor; and
a liquefier configured to liquify the carbon dioxide gas separated from the absorption liquid or the adsorbent by the separator, by using cold energy generated by the first heat transfer medium expanded by the expander.

2. The transport vehicle according to claim 1, wherein
the separator includes a heater configured to perform heat exchange between the absorption liquid or the adsorbent and the first heat transfer medium to heat the absorption liquid or the adsorbent, and
the liquefier includes a cooler configured to perform heat exchange between the first heat transfer medium and the carbon dioxide gas to cool the carbon dioxide gas.

3. The transport vehicle according to claim 1, wherein
the separator includes a heater configured to perform heat exchange between the first heat transfer medium and a second heat transfer medium via which thermal energy is transferred to the absorption liquid or the adsorbent, to thereby heat the second heat transfer medium, and
the liquefier includes a cooler configured to perform heat exchange between the first heat transfer medium and the carbon dioxide gas to cool the carbon dioxide gas.

4. The transport vehicle according to claim 2, wherein the refrigerator further includes a drive device-side heat exchanger configured to heat the absorption liquid or the adsorbent by using thermal energy generated by a drive device configured to drive the transport vehicle.

5. The transport vehicle according to claim 3, wherein the refrigerator further includes a drive device-side heat exchanger configured to heat the second heat transfer medium by using thermal energy generated by a drive device configured to drive the transport vehicle.

6. The transport vehicle according to any one of claims 1 to 5, wherein the refrigerator further includes a liquid carbon dioxide introduction line for guiding the liquid carbon dioxide liquified by the liquefier to the storage tank.

7. The transport vehicle according to any one of claims 1 to 5, further comprising an absorption liquid-side storage tank configured to store the absorption liquid.

8. The transport vehicle according to any one of claims 1 to 5, further comprising a reliquification system configured to reliquify gasified carbon dioxide gas in the storage tank by using cold energy generated by the first heat transfer medium expanded by the expander.

9. The transport vehicle according to claim 8, wherein the reliquification system includes a reliquefier configured to perform heat exchange between the first heat transfer medium expanded by the expander and the gasified carbon dioxide gas in the storage tank.

10. The transport vehicle according to claim 9, wherein
the compressor includes an electric compressor configured to be driven by an electric motor having variable output, and
the reliquification system further includes
a pressure acquisition unit configured to acquire a pressure inside the storage tank, and
a control device configured to adjust output of the electric motor according to the pressure inside the storage tank acquired by the pressure acquisition unit.

11. A carbon dioxide collection method for collecting carbon dioxide included in exhaust gas exhausted from a combustion device, the method comprising:
a carbon dioxide extraction step of causing the carbon dioxide included in the exhaust gas to be adsorbed by an absorption liquid or causing the carbon dioxide included in the exhaust gas to be adsorbed onto an adsorbent;
a compression step of compressing a first heat transfer medium by using a compressor in a refrigerator mounted in a transport vehicle for transporting liquid carbon dioxide;
a cooling step of cooling the first heat transfer medium compressed by the compressor by using a heat exchanger in the refrigerator;
an expansion step of expanding the first heat transfer medium cooled by the heat exchanger by using an expander in the refrigerator;
a separation step of separating carbon dioxide gas from the absorption liquid that has absorbed the carbon dioxide or the adsorbent onto which the carbon dioxide is adsorbed, by using thermal energy generated by the first heat transfer medium compressed by the compressor; and
a liquification step of liquifying the carbon dioxide gas separated from the absorption liquid or the adsorbent in the separation step, by using cold energy generated by the first heat transfer medium expanded by the expander.

12. A carbon dioxide transport method for transporting carbon dioxide, the method comprising:
a first transfer step of transferring liquid carbon dioxide collected at a facility for collecting carbon dioxide included in exhaust gas exhausted from a combustion device, to a first tank disposed in a remote location far from the facility; and
a second transfer step of transferring the liquid carbon dioxide from the first tank to a second tank via a first pipeline connecting the first tank and the second tank, the second tank being disposed in a remote location far from the first tank, wherein
the first transfer step includes a transport vehicle delivery step of storing the liquid carbon dioxide in a storage tank mounted in a transport vehicle and using the transport vehicle to deliver the liquid carbon dioxide stored in the storage tank to the first tank.

13. The carbon dioxide transport method according to claim 12, wherein the second transfer step includes
a pipeline-side gasification step of gasifying the liquid carbon dioxide flowing in the first pipeline by using a pipeline-side gasifier, and
a pipeline-side liquification step of liquifying carbon dioxide gas gasified in the pipeline-side gasification step by using a pipeline-side liquefier.

14. The carbon dioxide transport method according to claim 13, wherein the second transfer step further includes a pipeline-side decompression step of decompressing the carbon dioxide gas gasified in the pipeline-side gasification step by using a pipeline-side expander connected to a generator.

15. The carbon dioxide transport method according to claim 12, wherein, in the second transfer step, the liquid carbon dioxide is transferred from the first tank to the second tank as a liquid.

16. The carbon dioxide transport method according to claim 12, wherein the first transfer step further includes a pipeline transport step of transporting the liquid carbon dioxide from a large-scale facility to the first tank via a second pipeline connecting the large-scale facility and the first tank, the large-scale facility being a facility for collecting carbon dioxide included in exhaust gas exhausted from a combustion device that exhausts exhaust gas in a predetermined amount or higher.

17. The carbon dioxide transport method according to any one of claims 12 to 15, wherein
one or more of the first tanks are provided, each of the first tanks corresponding to one of a plurality of collection areas pre-divided for respective administrative districts, and
in the first transfer step, the liquid carbon dioxide is transferred from a facility for collecting the carbon dioxide to the first tank corresponding to the collection area containing the facility, the facility being located in each of the plurality of collection areas.

18. The carbon dioxide transport method according to claim 17, wherein the plurality of collection areas are divided for respective prefectural areas.

19. The carbon dioxide transport method according to any one of claims 12 to 15, wherein the second tank is disposed in a coastal location.
